# EUROPÄISCHE PATENTSCHRIFT

(11) **EP 2 359 300 B1**
(45) Veröffentlichungstag und Bekanntmachung des Hinweises auf die Patenterteilung: **06.03.2013**
(21) Anmeldenummer: 09778011.8
(22) Anmeldetag: 20.08.2009
(51) Int. Cl.: G06F 21/00

(54) **VERFAHREN ZUM SICHEREN SPEICHERN VON DATEN IN EINEM SPEICHER EINES TRAGBAREN DATENTRÄGERS**
METHOD FOR SECURELY STORING DATA IN A MEMORY OF A PORTABLE DATA CARRIER
PROCÉDÉ DE STOCKAGE SÉCURISÉ DE DONNÉES DANS UNE MÉMOIRE D'UN SUPPORT DE DONNÉES PORTATIF

(30) Priorität: 17.11.2008 DE 102008057681
(43) Veröffentlichungstag der Anmeldung: 24.08.2011
(73) Patentinhaber: Giesecke & Devrient GmbH, 81677 München (DE)
(72) Erfinder: RANKL, Wolfgang, 81825 München (DE)
(86) Internationale Anmeldenummer: PCT/EP2009/006049
(87) Internationale Veröffentlichungsnummer: WO 2010/054709

(56) Entgegenhaltungen:
- US-A- 5 844 841
- US-A1- 2003 198 082
- US-B1- 6 331 946

## Beschreibung

Die Erfindung betrifft ein Verfahren zum sicheren Speichern von Daten in einem Multilevel-Speicher eines tragbaren Datenträgers, wobei der Multilevel-Speicher eine oder mehrere Multilevel-Speicherzellen umfasst, die jeweils zumindest drei Pegel annehmen können, die einen unterschiedlichen Dateninhalt repräsentieren. Ein jeweiliger Pegel einer Speicherzelle kann dabei als gültig oder ungültig festgelegt werden.

Unter einem tragbaren Datenträger wird im Rahmen der vorliegenden Beschreibung z.B. eine Chipkarte, eine SIM (Subscriber Identity Module)-Karte, ein mit einem Mikrocontroller ausgerüsteter Schlüsselanhänger (Fob), ein Token oder dergleichen verstanden. Ein Mikrocontroller eines tragbaren Datenträgers umfasst einen nicht-flüchtigen Speicher, beispielsweise in Gestalt von EEPROM- oder Flash-Speicherzellen. Die Funktionsweise derartiger Speicher basiert darauf, dass das Vorhandensein bzw. Nichtvorhandensein einer elektrischen Ladung in einer Speicherzelle gemessen wird. Genauer wird dabei die auf einem sog. Floating Gate der Speicherzelle enthaltene Ladung ermittelt. Bei den Multilevel-Speicherzellen wird nicht nur das Vorhandensein einer Ladung, sondern auch die Größe der Ladung reproduzierbar ermittelt.

Es sind Verfahren bekannt, mit denen der Inhalt von EEPROM-/Flash-Speicherzellen verändert oder gelöscht werden kann. Beispielsweise lässt sich durch energiereiche Strahlung das Floating Gate einer Speicherzelle löschen. Die Veränderung von Dateninhalten einer Speicherzelle lässt sich sowohl für den gesamten Speicher als auch selektiv für bestimmte Speicherzellen durchführen. Es besteht daher die Möglichkeit, dass ein Angreifer den nichtflüchtigen Speicher in weiten Bereichen manipulieren kann.

Zur Sicherung des Dateninhalts eines nichtflüchtigen Speichers gegen manipulative Angriffe werden Prüfsummen für die zu schützenden Daten und/oder Programme verwendet. Als Prüfsummen werden beispielsweise CRC (Cyclic Redundancy Check)- oder Hash-Werte verwendet. Aufgrund von sich ändernden Dateninhalten müssen die entsprechenden Prüfsummen in regelmäßigen Abständen neu berechnet und gespeichert werden. Dieses Vorgehen ist jedoch mit mehreren Nachteilen verbunden. Zum einen erfordert die Berechnung und das Speichern der Prüfsummen Zeit. Zum anderen ist es nicht ausreichend, für den gesamten Speicher eine einzige Prüfsumme zu ermitteln, da diese bei vielen Schreibzugriffen nicht benötigt wird. Folglich wird der nichtflüchtige Speicher mit einer Vielzahl von Prüfsummen für unterschiedliche Speicherbereiche, welche jeweils eine Anzahl an Speicherzellen aufweisen, geschützt. Darüber hinaus besteht die Gefahr, dass neben den eigentlichen Nutzdaten im Rahmen eines Angriffs auch die entsprechende Prüfsumme manipuliert wird, so dass ein den Speicher verwaltendes Betriebssystem durch den Angriff veränderte Daten nicht mehr erkennen kann.

In der US 6,331,946 B1 wird deshalb vorgeschlagen, einen Multilevel-Speicher für das sichere Speichern von sensiblen Informationen zu verwenden, in dem die beiden äußeren Pegel (sog. Level) für ungültig in Bezug auf einen gespeicherten Dateninhalt erklärt werden. Zum Speichern von Informationen werden lediglich die innerhalb der beiden äußeren Level gelegenen Level verwendet. Diesem Vorgehen liegt die Überlegung zu Grunde, dass bei einem Versuch, den Dateninhalt einer Speicherzelle zu manipulieren, einer der ungültigen Zustände der Multilevel-Speicherzelle herbeigeführt wird, was sich auf einfache Weise detektieren und als Manipulation erkennen lässt.

Es ist Aufgabe der vorliegenden Erfindung, ein Verfahren zum Speichern von Daten in einem Multilevel-Speicher eines tragbaren Datenträgers anzugeben, das eine weiter verbesserte Sicherheit gegenüber Manipulationen erlaubt.

Diese Aufgabe wird durch ein Verfahren mit den Merkmalen des Patentanspruches 1 gelöst. Vorteilhafte Ausgestaltungen sind in den abhängigen Patentansprüchen angegeben.

Das erfindungsgemäße Verfahren geht von dem im Stand der Technik beschriebenen Verfahren zum sicheren Speichern von Daten in einem Multilevel-Speicher eines tragbaren Datenträgers aus. Entsprechend umfasst der Multilevel-Speicher eine oder mehrere Multilevel-Speicherzellen, die jeweils zumindest drei Pegel (sog. Level) annehmen können, die einen unterschiedlichen Dateninhalt repräsentieren, und bei dem jeweilige Pegel einer Speicherzelle als gültig oder ungültig festgelegt werden. Erfindungsgemäß ist vorgesehen, dass die Pegel einer jeweiligen Speicherzelle in Abhängigkeit eines erforderlichen Sicherheitsniveaus selektiv als gültig oder ungültig festgelegt werden.

Die Erfindung beruht somit auf dem aus dem Stand der Technik bekannten Gedanken, nicht die gesamte mögliche Speicherkapazität eines nichtflüchtigen Speichers in Multilevel-Technologie auszunutzen. Vielmehr werden in Abhängigkeit von einem erforderlichen Sicherheitsniveau, d.h. von einem entsprechend dem notwendigen Schutz für einen jeweiligen Dateninhalt festgelegten Sicherheitsniveau, die Pegel einer jeweiligen Speicherzelle selektiv als gültig oder ungültig festgelegt. Damit kann die Sicherheit des nicht-flüchtigen Speichers skalierbar gestaltet werden.

Insbesondere wird das Verhältnis der Anzahl von gültigen zu ungültigen Pegeln einer jeweiligen Speicherzelle in Abhängigkeit von dem erforderlichen Sicherheitsniveau variiert. Dabei kann vorgesehen sein, dass die Speicherzelle bei einem maximal erforderlichen Sicherheitsniveau lediglich einen gültigen Pegel für die Speicherung eines Dateninhalts aufweist, während alle anderen Pegel, welche die Speicherzelle annehmen kann, ungültig sind. In einer anderen Ausgestaltung sind bei einem minimal erforderlichen Sicherheitsniveau sämtliche Pegel der Speicherzelle für die Speicherung von Dateninhalten gültig, so dass die gesamte mögliche Speicherkapazität der Speicherzelle ausgenutzt werden kann.

Das erfindungsgemäße Verfahren ermöglicht damit die Variation des Verhältnisses von erlaubten bzw. verbotenen Pegeln bzw. Dateninhalten der Speicherzellen des Speichers des tragbaren Datenträgers, wobei das Verhältnis je nach notwendiger Sicherheit variiert werden kann. Insbesondere kann hierbei vorgesehen sein, dass die Variation innerhalb des Speichers erfolgt, so dass beispielsweise geheime Schlüssel in definierten Speicherzellen besonders geschützt werden, während von außerhalb des tragbaren Datenträgers frei lesbare Daten in Speicherzellen vorgesehen werden, die wenig oder überhaupt keinen Schutz aufweisen.

Gemäß einer weiteren Ausgestaltung erfolgt die Festlegung von gültigen und ungültigen Pegeln für die eine oder die mehreren Speicherzellen des Multilevel-Speichers dynamisch oder im Rahmen der Herstellung. Dies weist den Vorteil auf, dass selbst dann, wenn bei einem Angriff Speicherzellen so manipuliert werden, dass sie eine bestimmte Ladung und damit einen bestimmten Dateninhalt enthalten, nicht bekannt ist, welche Pegel und damit Dateninhalte in den jeweiligen Speicherzellen erlaubt bzw. verboten sind.

In einer konkreten Ausgestaltung erfolgt die dynamische Festlegung von gültigen und ungültigen Pegeln für die eine oder die mehreren Speicherzellen unter Rückgriff auf eine Tabelle, eine Funktion oder einen Pseudozufallszahlengenerator, dessen Ausgabe deterministisch, d.h. beliebig wiederholbar, ist. Insbesondere werden beim Lesen von Daten aus einer Speicherzelle die erlaubten Pegel über die Tabelle, die Funktion oder den Pseudozufallszahlengenerator für die betreffende Speicherzelle ermittelt. Erst dann wird es ermöglicht, Daten von einer bestimmten Adresse zu lesen. Hierdurch wird eine weitere Erhöhung der Sicherheit beim Speichern von Daten in einem Multilevel-Speicher eines tragbaren Datenträgers erreicht.

Eine weitere Ausgestaltung sieht vor, dass beim Lesen einer Speicherzelle des Multilevel-Speichers überprüft wird, ob diese gemäß den festgelegten gültigen und ungültigen Pegeln einen erlaubten oder einen unerlaubten Dateninhalt repräsentieren, wobei bei einem erlaubten Dateninhalt dieser zur weiteren Verarbeitung bereitgestellt wird, und bei einem unerlaubten Dateninhalt auf eine Manipulation der Speicherzelle geschlossen wird. Auf diese Weise kann die unbeabsichtigte Verwendung manipulierter Dateninhalte vermieden werden.

In einer vorteilhaften Weiterbildung des erfindungsgemäßen Verfahrens wird die Festlegung der gültigen Pegel genutzt, um in einfacher Weise ein hardwarenahes sicheres Löschen von logisch als gelöscht deklarierten Speicherzellen zu bewirken. Hierzu werden bei einem Löschvorgang die als gültig definierten Pegel gegen ursprünglich ungültige vertauscht. Der Dateninhalt der Speicherzelle kann so selbst dann nicht wiedergewonnen werden, wenn bei einem Manipulationsversuch die zugeordnete logische Gelöschtdeklaration umgangen werden kann.

In einer weiteren vorteilhaften Weiterbildung des erfindungsgemäßen Verfahrens wird die selektive gültig/ungültig-Festlegung der Pegel genutzt, um durch Alterung oder Umgebungseinflüsse bedingte physikalische Veränderungen der Speicherzellen zu kompensieren. Speicherzellen altern durch unterschiedliche Umgebungsbedingungen wie Luftfeuchtigkeit, Wärme oder Strahlung. Einzelne Pegel lassen sich dann nicht mehr zuverlässig einstellen oder verändern sich selbständig. Die Veränderungen sind dauerhaft und folgen üblicherweise einem festen, deterministischen Prinzip. Beispielsweise verringern sich die die einzelnen Pegel einer Speicherzelle festlegenden Ladungen mit der Zeit, so daß der durch die Ladung repräsentierte Dateninhalt scheinbar einem anderen Pegel entspricht. Wird eine solche veränderte Funktion einer Speicherzelle erkannt, kann durch Abbildung des zugrundeliegenden Veränderungsprinzips auf die gültig/ ungültig-Festlegung der Pegel in einfacher Weise der ursprüngliche Zustand der Speicherzelle wiederhergestellt oder aufrechterhalten werden. Die Erkennung einer zugrundeliegenden Veränderung kann dabei mittels einer gesonderten Sensorik geschehen. Sie kann aber auch durch Auswertung der Speicherzellen selbst erfolgen, indem etwa eine Mehrzahl von benachbarten Speicherzellen auf gleichartige Veränderungen ihrer Dateninhalte überprüft wird. Durch die Kompensation derartiger Veränderungen wird es zum einen möglich, "sterbende" Speicherzellen länger zu betreiben; zugleich signalisiert die Vornahme einer Kompensation, daß eine Speicherzelle nicht mehr vollkommen intakt ist und ausgetauscht werden sollte.

Die Erfindung wird nachfolgend näher anhand eines Ausführungsbeispiels unter Bezugnahme auf die Zeichnungen erläutert. Es zeigen:
- Fig. 1: eine Tabelle, welche die möglichen Zustände von konventionellen und Multilevel-Speicherzellen gegenüberstellt, und
- Fig. 2: eine Tabelle, welche das der Erfindung zu Grunde liegende Vorgehen veranschaulicht.

Zur Durchführung des erfindungsgemäßen Verfahrens wird ein Multilevel-Speicher eines tragbaren Datenträgers, insbesondere einer Chipkarte, verwendet. Der Multilevel-Speicher umfasst in bekannter Weise eine oder mehrere Multilevel-Speicherzellen, die jeweils zumindest drei Pegel annehmen können, die einen unterschiedlichen Dateninhalt repräsentieren. Die Pegel einer Multilevel-Speicherzelle werden auch als Level bezeichnet. Das Verfahren zur Bereitstellung eines verbesserten Schutzes gegenüber Manipulation beruht darauf, dass nicht die gesamte mögliche Speicherkapazität des nicht-flüchtigen Multilevel-Speichers ausgenutzt wird. Stattdessen werden pro Speicherzelle in Abhängigkeit eines erforderlichen Sicherheitsniveaus selektiv gültige oder ungültige Pegel festgelegt. Anders ausgedrückt bedeutet dies, es werden pro Speicherzelle selektiv erlaubte bzw. nichterlaubte Dateninhalte festgelegt. Beim Auslesen einer jeweiligen Speicherzelle des Multilevel-Speichers wird überprüft, ob diese gemäß den vorab festgelegten gültigen und ungültigen Pegeln einen erlaubten oder einen unerlaubten Dateninhalt repräsentieren, wobei bei einem erlaubten Dateninhalt dieser zur weiteren Verarbeitung, z.B. an eine aufrufende Routine des tragbaren Datenträgers, weitergegeben wird. Handelt es sich jedoch um einen nichterlaubten Dateninhalt, so wird davon ausgegangen, dass der Inhalt der Speicherzelle manipuliert wurde.

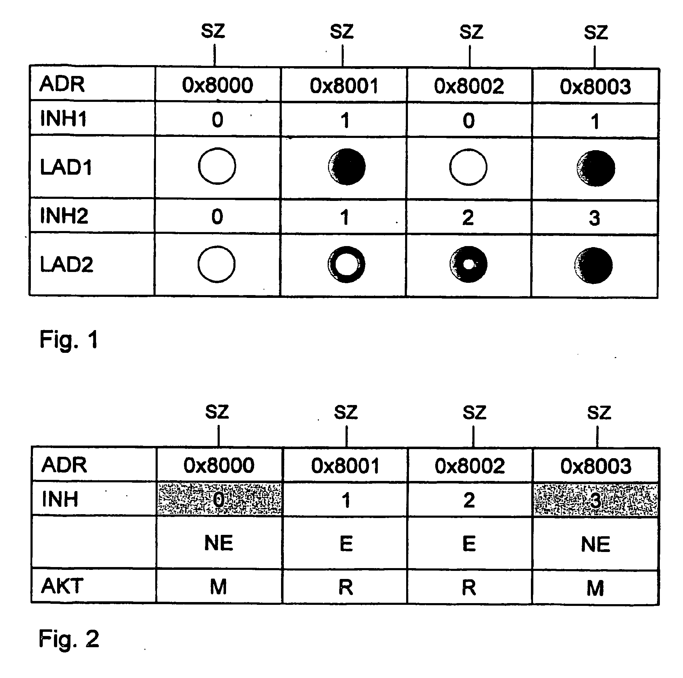

Der Schutz gegenüber konventioneller Speichertechnologie, deren Speicherzellen lediglich zwei Pegel (Zustände) annehmen kann, basiert darauf, dass es für einen Angreifer bei einer Manipulation ungleich schwieriger ist, Zwischenzustände einer Multilevel-Speicherzelle zu erreichen als den Zustand einer leeren oder vollen konventionellen Speicherzelle. Fig. 1 zeigt eine Tabelle, in der die Beispielinhalte und eine jeweils zugehörige elektrische Ladung einer konventionellen und einer Multilevel-Speicherzelle mit vier möglichen Pegeln dargestellt sind. Mit ADR sind beispielhafte Adressen 0x8000, 0x8001, 0x8002 und 0x8003 einer jeweiligen Speicherzelle gekennzeichnet. INH1 repräsentiert beispielhaft den Dateninhalt von konventionellen Zellen in logischer Darstellung. LAD1 repräsentiert den Dateninhalt der konventionellen Speicherzellen hinsichtlich deren elektrischer Ladung. Dabei repräsentiert ein leerer Kreis z.B. ein nicht aufgeladenes Floating Gate und ein voller Kreis ein aufgeladenes Floating Gate. INH2 repräsentiert beispielhaft den Dateninhalt von Vierfach-Multilevel-Speicherzellen in logischer Darstellung. LAD2 repräsentiert den Dateninhalt der Vierfach-Multilevel-Speicherzellen hinsichtlich der jeweiligen elektrischen Ladung. Je größer das Verhältnis der schwarzen Fläche zu der weißen Fläche ist, desto größer ist z.B. die Ladung des Floating Gates. Insgesamt kann in dem gezeigten Ausführungsbeispiel eine jeweilige Multilevel-Speicherzelle vier unterschiedliche Ladungen annehmen.

Die Speicherzellen SZ mit der Adresse 0x8000 und 0x8002 in konventioneller Speichertechnologie weisen eine logische "0" auf. Demgegenüber weisen die Speicherzellen SZ mit den Adressen 0x8001 und 0x8003 eine logische "1" auf. Die logische "0" wird beispielsweise durch ein nicht aufgeladenes Floating Gate repräsentiert. In entsprechender Weise wird eine logische "1" durch ein aufgeladenes Floating Gate repräsentiert. Je nach verwendeter Logik des Speichers kann dies jedoch auch umgekehrt sein.

Im Gegensatz dazu können die Speicherzellen SZ eines Multilevel-Speichers nicht nur zwei, sondern insgesamt vier unterschiedliche Zustände ("0", "1", "2" und "3") annehmen, wobei diese unterschiedlichen Zustände durch eine unterschiedlich große Ladung auf dem Floating Gate repräsentiert wird. Beispielsweise wird eine logisch "0" der Speicherzelle SZ mit der Adresse 0x8000 durch ein nichtaufgeladenes Floating Gate repräsentiert. Ein vollständig aufgeladenes Floating Gate repräsentiert eine logisch "3", was beispielhaft in der Speicherzelle SZ mit der Adresse 0x8003 dargestellt ist. Die Speicherzellen SZ mit den Adressen 0x8001 und 0x8002 weisen zwischen diesen beiden äußeren Zuständen gelegene Pegel auf. Je nach verwendeter Logik des Speichers kann dies jedoch auch umgekehrt sein.

Zur Erhöhung der Sicherheit der in einem Multilevel-Speicher enthaltenen Daten werden beispielsweise lediglich die Dateninhalte "1" und "2" bzw. deren korrespondierende Pegel als erlaubt definiert, was in der Tabelle gemäß Fig. 2 durch "E" gekennzeichnet ist. Die Dateninhalte "0" und "3" repräsentieren dem gegenüber nicht erlaubte Dateninhalte bzw. Pegel. Dies bedeutet, werden beim Auslesen einer Speicherzelle die Dateninhalte "0" und "3" ermittelt, so wird von einer erfolgreichen Manipulation der jeweiligen Speicherzelle SZ (in Tabelle 1 der Speicherzellen mit der Adresse 0x8000 und 0x8003) ausgegangen. In Fig. 2 ist ferner dargestellt, dass ein erlaubter Pegel, welcher einen zulässigen Dateninhalt repräsentiert, ausgelesen wird, während ein nichterlaubter Pegel keiner weiteren Verarbeitung zugeführt wird. Dies ist in der letzten Zeile der Tabelle schematisch dargestellt, in welcher eine jeweils durchzuführende Aktion AKT mit M oder R gekennzeichnet ist. M steht stellvertretend für eine manipulierte Speicherzelle, deren Dateninhalt nicht weiter verarbeitet wird, sondern beispielsweise durch ein Betriebssystem des tragbaren Datenträgers besonders behandelt wird. R steht stellvertretend für eine nicht manipulierte Speicherzelle, deren Inhalt ausgelesen und weiter verarbeitet wird.

Die Einschränkung der Verwendung von bestimmten Pegeln bzw. Dateninhalten führt zwar zu einer Verringerung des zur Verfügung stehenden Speichers. Demgegenüber ist jedoch ein erheblicher Sicherheitsgewinn verbunden. Die Erfindung ermöglicht es insbesondere, zusätzlich die Sicherheit des nichtflüchtigen Speichers skalierbar zu gestalten. Bei einem maximal erforderlichen Sicherheitsniveau kann beispielsweise festgelegt werden, dass die Speicherzelle lediglich einen einzigen gültigen Pegel aufweist. Demgegenüber kann bei einem minimal erforderlichen Sicherheitsniveau festgelegt werden, dass sämtliche Pegel der Speicherzelle für jeweilige Dateninhalte gültig sind. Diese Variation kann innerhalb des gesamten Multilevel-Speichers vorgenommen werden, so dass geheime Schlüssel oder andere sensible Informationen besonders geschützt werden können. Von außerhalb des Multilevel-Speichers des tragbaren Datenträgers frei lesbare Daten können dagegen derart abgespeichert werden, dass diese keinen oder nur geringen Schutz aufweisen.

In einer Ausgestaltungsvariante zu einer fixen Festlegung von gültigen und ungültigen Pegeln einer Speicherzelle ist vorgesehen, dies dynamisch für bestimmte Bereiche, d.h. Speicherzellen, des nichtflüchtigen Speichers zu tun. Selbst wenn es einem Angreifer möglich wäre, Speicherzellen so zu manipulieren, dass sie eine bestimmte Ladung und damit einen bestimmten Dateninhalt enthalten, ist dem Angreifer nicht bekannt, welche Dateninhalte in den jeweiligen Speicherzellen erlaubt oder verboten sind.

In einer weiteren Variante ist vorgesehen, gültige und ungültige Pegel bzw. Dateninhalte Speicherzellen-individuell festzulegen. Diese Festlegung kann über eine Tabelle, eine Funktion oder über einen Pseudozufallszahlengenerator erfolgen, dessen Ausgabe deterministisch und damit beliebig wiederholbar ist. Beim Lesen von Daten aus einem derartig geschützten Speicher müssen beispielsweise über den Pseudozufallszahlengenerator die erlaubten Dateninhalte für eine jeweilige Speicherzelle, d.h. die jeweilige Speicheradresse, ermittelt werden. Erst dann ist es möglich, den Dateninhalt aus der zu der Speicheradresse gehörigen Speicherzelle zu lesen.

Es ist ferner möglich, die dynamische und Speicherzellen-individuelle Festlegung von gültigen und ungültigen Pegeln zusätzlich Chip-individuell vorzunehmen. Vor dem Einbringen von Dateninhalten bei der Fertigung des tragbaren Datenträgers, insbesondere bei dessen Initialisierung und Personalisierung, kann beispielsweise der Pseudozufallszahlengenerator Chip-individuell zufällig parametrisiert werden. Unter Verwendung der von dem Pseudozufallszahlengenerator erzeugten Werte können dann Daten in den nichtflüchtigen Speicher eingebracht werden.

Ein möglicher Algorithmus für den Lesevorgang aus einer Speicherzelle kann wie folgt aussehen:
1. Zunächst wird der Dateninhalt DI einer Speicherzelle mit der Adresse X gelesen.
2. Es werden die erlaubten Dateninhalte eDI der Speicherzelle mit der Adresse X ermittelt.
3. Es wird überprüft, ob der Dateninhalt DI im Bereich des erlaubten Dateninhalts eDI liegt. Falls dies der Fall ist, wird der Dateninhalt DI als nicht manipuliert betrachtet und der aufrufenden Routine übergeben. Falls der Dateninhalt nicht im Bereich des erlaubten Dateninhalts eDI liegt, wird davon ausgegangen, dass der Dateninhalt DI manipuliert ist. Es können entsprechende Maßnahmen vom Betriebssystem eingeleitet werden.

Die vorstehend beschriebene Vorgehensweise, nur bestimmte Pegel einer Multilevel-Speicherzelle als gültig zu definieren, kann auch herangezogen werden, um ein hardwarenahes, sicheres Löschen von Multilevel-Speicherzellen zu bewirken. Hierzu werden bei einem Löschvorgang die bis dahin als gültig definierten Pegel gegen ungültige Pegel vertauscht. Beispielsweise werden in der in Fig. 2 gezeigten Tabelle die mit "E" bezeichneten, erlaubten Zustände in mit "NE" bezeichnete, unerlaubte Zustände überführt und die unerlaubten durch Ersetzen des "E" durch "NE" in erlaubte Zustände. In diesem Fall kann die Speicherzelle zwar noch ausgelesen werden, liefert aber unbrauchbare Dateninhalte. Das Pegel-Umdefinieren, um ein Löschen zu simulieren, ist umso wirksamer, je größer die Zahl der möglichen Zustände einer Speicherzelle ist.

Da die Pegel unterschiedliche physikalische Zustände einer Speicherzelle repräsentieren, können sie auch genutzt werden, um typische zeitbedingte physikalische Veränderungen der Speicherzellen zu kompensieren. Speicherzellen altern u.a. durch unterschiedliche Umgebungsbedingungen wie Luftfeuchtigkeit, Wärme oder Strahlung. Dies führt über die Zeit eine verschlechterte Funktion. Regelmäßig lassen sich dann irgendwann einzelne Pegel nicht mehr zuverlässig einstellen oder verändern sich selbständig. Die veränderte Funktionalität ist aber üblicherweise dauerhaft und folgt einem festen, deterministischen Prinzip. Beispielsweise verringert sich mit der Zeit die Fähigkeit einer Speicherzelle zur Speicherung von den einzelnen Pegeln entsprechenden Ladungen, so daß ein durch eine Ladung repräsentierter Pegel scheinbar einem anderen Dateninhalt entspricht. Durch eine geeignete Definition einer Gültigkeitstabelle, wie sie in Fig. 2 gezeigt ist, kann die veränderte Funktion einer oder mehrerer Speicherzellen ausgeglichen werden. Eine derartige Gültigkeitstabelle könnte beispielsweise zwischen jeweils zwei erlaubten Zuständen "E" mindestens einen nicht erlaubten Zustand "NE" aufweisen. Unter Berücksichtigung der zu erwartenden veränderten Funktionalität kann nun eine Kompensation vorgenommen werden, indem beispielsweise bei Vorliegen eines nicht erlaubten Zustandes "NE" der nächsthöhere erlaubte Zustand "E" als tatsächlicher Wert angenommen wird, um zu berücksichtigen, dass der Pegel der Speicherzelle abgesunken ist. Die Umsetzung der Kompensation kann selbstverständlich nach komplexeren Mechanismen erfolgen. Durch die Kompensation läßt sich eine Speicherzelle, auch wenn sie bereits nicht mehr völlig intakt ist, zumindest noch für eine gewisse Zeit weiternutzen. Zweckmäßig wird der Umstand, daß eine Kompensation erfolgt, über geeignete Ausgabemittel angezeigt, so daß die Speicherzelle ersetzt oder stillgelegt werden kann.

Um festzustellen, ob in einer Speicherzelle kompensierbare zeit- oder umgebungsbedingte Veränderungen vorliegen, können in einfacher Weise Blöcke benachbarter Speicherzellen darauf geprüft werden, ob sie gleichartige oder reinem bestimmten Muster folgende Veränderungen aufweisen. Alternativ kann die Feststellung zeit- oder umgebungsbedingter Veränderungen mittels gesonderter Sensoren erfolgen.

Das erfindungsgemäße Verfahren ermöglicht es, Daten in Multilevel-Speichern eines tragbaren Datenträgers manipulationssicher zu speichern, ohne dass dabei die Verwendung zusätzlicher Prüfsummen notwendig ist. Das Verfahren beruht auf der Verwendung einer verfügbaren Speichertechnologie mit Multilevel-Speicherzellen. Das Verfahren kann auf einfache Weise und mit geringem Aufwand an einem verwendeten Betriebssystem eingesetzt werden.

## Patentansprüche

1. Verfahren zum sicheren Speichern von Daten in einem Multilevel-Speicher eines tragbaren Datenträgers, wobei der Multilevel-Speicher eine oder mehrere Multilevel-Speicherzellen (SZ) umfasst, die jeweils zumindest drei Pegel (E, NE) annehmen können, die einen unterschiedlichen Dateninhalt repräsentieren, bei dem jeweilige Pegel (E, NE) einer Speicherzelle (SZ) als gültig oder ungültig festgelegt werden,
**dadurch gekennzeichnet, dass**
die Pegel (E, NE) einer jeweiligen Speicherzelle (SZ) in Abhängigkeit von einem erforderlichen Sicherheitsniveau selektiv als gültig oder ungültig festgelegt werden.

2. Verfahren nach Anspruch 1, **dadurch gekennzeichnet, dass** das Verhältnis der Anzahl von gültigen zu ungültigen Pegeln einer jeweiligen Speicherzelle (SZ) in Abhängigkeit von dem erforderlichen Sicherheitsniveau variiert wird.

3. Verfahren nach Anspruch 1 oder 2, **dadurch gekennzeichnet, dass** die Speicherzelle (SZ) bei einem maximal erforderlichen Sicherheitsniveau lediglich einen gültigen Pegel (E, NE) aufweist.

4. Verfahren nach einem der vorherigen Ansprüche, **dadurch gekennzeichnet, dass** bei einem minimal erforderlichen Sicherheitsniveau sämtliche Pegel (E, NE) der Speicherzelle (SZ) gültig sind.

5. Verfahren nach einem der vorherigen Ansprüche, **dadurch gekennzeichnet, dass** die Festlegung von gültigen und ungültigen Pegeln für die eine oder die mehreren Speicherzellen (SZ) des Multilevel-Speichers dynamisch oder im Rahmen der Herstellung erfolgt.

6. Verfahren nach Anspruch 5, **dadurch gekennzeichnet, dass** die dynamische Festlegung von gültigen und ungültigen Pegeln für die eine oder die mehreren Speicherzellen (SZ) unter Rückgriff auf eine Tabelle, eine Funktion oder einen Pseudozufallszahlengenerator, dessen Ausgabe deterministisch ist, erfolgt.

7. Verfahren nach Anspruch 6, **dadurch gekennzeichnet, dass** beim Lesen von Daten aus einer Speicherzelle (SZ) die erlaubten Pegel (E, NE) über die Tabelle, die Funktion oder den Pseudozufallsgenerator für die betreffende Speicherzelle (SZ) ermittelt werden.

8. Verfahren nach einem der vorherigen Ansprüche, **dadurch gekennzeichnet, dass** beim Auslesen einer Speicherzelle (SZ) des Multilevel-Speichers überprüft, wird, ob diese gemäß den festgelegten gültigen und ungültigen Pegeln (E, NE) einen erlaubten oder einen unerlaubten Dateninhalt repräsentient, wobei bei einem erlaubten Dateninhalt dieser zur weiteren Verarbeitung bereit gestellt wird, und bei einem unerlaubten Dateninhalt auf eine Manipulation der Speicherzelle (SZ) geschlossen wird.

9. Verfahren nach einem der vorherigen Ansprüche, dadurch gekennzeichriet, daß wenn für eine Speicherzelle (SZ) eine zeit- oder umgebungsbedingte Veränderung festgestellt wurde, bei Vorliegen eines ungültigen Pegels (NE) in dieser Speicherzelle (SZ) der nächsthöhere erlaubte Pegel (E) als tatsächlicher Pegel angesehen wird.

## Claims

1. A method for securely storing data in a multilevel memory of a portable data carrier, wherein the multilevel memory comprises one or several multilevel memory cells (SZ) which can assume respectively at least three levels (E, NE) representing a different data content, in which respective levels (E, NE) of a memory cell (SZ) are specified as valid or invalid,
**characterized in that**
the levels (E, NE) of a respective memory cell (SZ) are selectively specified as valid or invalid in dependence on a required security level.

2. The method according to claim 1, **characterized in that** the ratio of the number of valid to invalid levels of a respective memory cell (SZ) is varied in dependence on the required security level.

3. The method according to claim 1 or 2, **characterized in that** the memory cell (SZ) on a maximally required security level has merely one valid level (E, NE).

4. The method according to any of the preceding claims, **characterized in that** on a minimally required security level all levels (E, NE) of the memory cell (SZ) are valid.

5. The method according to any of the preceding claims, **characterized in that** the specification of valid and invalid levels for the one or the several memory cells (SZ) of the multilevel memory takes place dynamically or within the framework of production.

6. The method according to claim 5, **characterized in that** the dynamic specification of valid and invalid levels for the one or the several memory cells (SZ) takes place making use of a table, a function or a pseudo-random number generator, whose output is deterministic.

7. The method according to claim 6, **characterized in that** upon reading data from a memory cell (SZ) the permissible levels (E, NE) are ascertained for the memory cell (SZ) in question via the table, the function or the pseudo-random generator.

8. The method according to any of the preceding claims, **characterized in that** upon reading out a memory cell (SZ) of the multilevel memory it is checked whether this represents, in accordance with the specified valid and invalid levels (E, NE), a permissible or an impermissible data content, wherein in the case of a permissible data content said data content is made available for further processing, and in the case of an impermissible data content it is concluded that the memory cell (SZ) was tampered with.

9. The method according to any of the preceding claims, **characterized in that**, when for a memory cell (SZ) a temporally or environmentally induced change was determined, in the case that an impermissible level (NE) is present in this memory cell (SZ) the subsequently higher permissible level (E) is presumed as actual level.

## Revendications

1. Procédé de mémorisation sûre de données dans une mémoire à plusieurs niveaux d'un support de données portable, la mémoire à plusieurs niveaux comprenant une ou plusieurs cellules de mémoire (SZ) à plusieurs niveaux qui peuvent respectivement adopter au moins trois niveaux (E, NE) qui représentent un contenu de données différent, dans lequel des niveaux respectifs (E, NE) d'une cellule de mémoire sont établis comme étant valides ou invalides,
**caractérisé en ce que**
les niveaux (E, NE) d'une cellule de mémoire (SZ) respective sont établis sélectivement comme étant valides ou invalides en fonction d'un niveau de sécurité nécessaire.

2. Procédé selon la revendication 1, **caractérisé en ce que** l'on fait varier la relation entre le nombre de niveaux valides et le nombre de niveaux invalides d'une cellule de mémoire (SZ) respective en fonction du niveau de sécurité nécessaire.

3. Procédé selon la revendication 1 ou 2, **caractérisé en ce que**, pour un niveau de sécurité nécessaire maximal, la cellule de mémoire (SZ) présente seulement un niveau valide (E, NE).

4. Procédé selon une des revendications précédentes, **caractérisé en ce que**, pour un niveau de sécurité nécessaire minimal, tous les niveaux (E, NE) de la cellule de mémoire (SZ) sont valides.

5. Procédé selon une des revendications précédentes, **caractérisé en ce que** l'établissement de niveaux valides et invalides pour la une ou les plusieurs cellules de mémoire (SZ) de la mémoire à plusieurs niveaux a lieu de manière dynamique ou dans le cadre de la fabrication.

6. Procédé selon la revendication 5, **caractérisé en ce que** l'établissement dynamique de niveaux valides et invalides pour la une ou les plusieurs cellules de mémoire (SZ) a lieu en ayant recours à une table, à une fonction ou à un générateur de nombres pseudo-aléatoires dont la sortie est déterministe.

7. Procédé selon la revendication 6, **caractérisé en ce que**, lors de la lecture de données à partir de la cellule de mémoire (SZ), les niveaux autorisés (E, NE) sont établis par l'intermédiaire de la table, de la fonction ou du générateur pseudo-aléatoire pour la cellule de mémoire (SZ) concernée.

8. Procédé selon une des revendications précédentes, **caractérisé en ce que**, lors de la lecture d'une cellule de mémoire (SZ) de la mémoire à plusieurs niveaux, il est vérifié si elle représente un contenu de données autorisé ou non autorisé selon les niveaux (E, NE) établis valides et invalides, et, dans le cas d'un contenu de données autorisé, ce dernier étant mis à disposition pour un traitement subséquent, et, dans le cas d'un contenu de données non autorisé, une manipulation de la cellule de mémoire (SZ) en étant déduite.

9. Procédé selon une des revendications précédentes, **caractérisé en ce que**, quand une modification liée au temps ou à l'environnement a été constatée pour une cellule de mémoire (SZ), le niveau (E) autorisé immédiatement supérieur est considéré comme niveau réel quand il y a un niveau invalide (NE) dans cette cellule de mémoire (SZ).
